# DEMANDE DE BREVET EUROPEEN

(11) **EP 1 246 474 A1**
(43) Date de publication de la demande: **02.10.2002**
(21) Numéro de dépôt: 02076141.7
(22) Date de dépôt: 19.03.2002
(51) Int. Cl.: H04N 9/04

(54) **Appareil de prise de vue et procédé pour traiter des images prises par un tel appareil**

(30) Priorité: 27.03.2001 FR 0104110
(71) Demandeur: Koninklijke Philips Electronics N.V., 5621 BA Eindhoven (NL)
(72) Inventeur: Bompard, Frédéric, c/o Société Civile SPID, 75008 Paris (FR)
(74) Mandataire: Chaffraix, Jean

(57) **Abrégé**

Cet appareil de prise de vue est formé à partir d'un capteur (3) d'éléments sensibles à différentes composantes de couleur de la vue présentant tout un spectre de fréquences spatiales, d'au moins un premier organe de filtrage d'image (10) pour les fréquences basse du spectre en vue de traiter les signaux issus desdits éléments sensibles. Cet appareil est essentiellement constitué par une première branche (B1) dans laquelle est inséré ledit premier organe de filtrage (10) et par une deuxième branche (B2) dans laquelle est inséré un deuxième organe de filtrage (12) pour les fréquences hautes du spectre afin de filtrer tous les signaux issus desdits éléments et un dispositif de combinaison pour fournir une image en tenant compte des signaux de sortie desdites branches. Ainsi, on obtient un bon piqué de l'image.

## Description

L'invention concerne un appareil de prise de vue formé à partir d'un capteur composé d'éléments sensibles à différentes composantes de couleur de la vue présentant tout un spectre de fréquences spatiales, d'au moins un premier organe de filtrage d'image pour les fréquences basses du spectre en vue de traiter les signaux issus desdits éléments sensibles.

L'invention concerne aussi un procédé pour traiter des images prises par un tel appareil.

Un tel appareil est décrit dans le document de brevet japonais 07-284110. Dans ce document, on propose de filtrer les différentes composantes de couleur de l'image en vue d'accroître la résolution de l'image obtenue à partir de la vue.

La présente invention propose un appareil du genre mentionné dans le préambule qui présente une notable simplification du filtrage et qui apporte un piqué aux images sans utiliser trop de calculs de filtrage.

Pour cela, un tel appareil est remarquable en ce qu'il comporte une première branche dans laquelle est inséré ledit premier organe de filtrage, au moins une deuxième branche dans laquelle est inséré un deuxième organe de filtrage pour les fréquences hautes du spectre afin de filtrer tous les signaux issus desdits éléments et un dispositif de combinaison pour fournir une image en tenant compte des signaux de sortie desdites branches.

Un procédé mis en oeuvre dans un tel appareil est remarquable en ce qu'il comporte les étapes suivantes :
- impression du capteur composé d'éléments sensibles aux différentes composantes de couleur de la vue,
- traitement des informations de ce capteur par une première branche de traitement opérant sur les éléments sensibles à la couleur,
- traitement des informations de ce capteur par une deuxième branche de traitement opérant sur tous les éléments sans tenir compte de la couleur et opérant sur la partie haute du spectre spatial,
- combinaison des différentes informations élaborées par lesdites branches pour fournir une image d'utilisation.

L'idée de l'invention consiste donc à ajouter des informations d'images sans tenir compte de la couleur et donc à utiliser tous les points du capteur. L'oeil humain est bien plus sensible aux transitions de luminance qu'aux transitions de couleurs.

La description suivante, faite en regard des dessins ci-annexés, le tout donné à titre d'exemples non limitatifs fera bien comprendre comment l'invention peut être réalisée. Sur les dessins :
La figure 1 montre un schéma de l'appareil conforme à l'invention.
La figure 2 montre plus en détail la structure d'un appareil conforme à l'invention.
La figure 3 montre la trace du spectre spatial traité par l'appareil conformément à l'invention.
La figure 4 montre un exemple de la réalisation de l'organe de filtrage pour les fréquences hautes du spectre faisant partie de l'appareil conforme à l'invention.

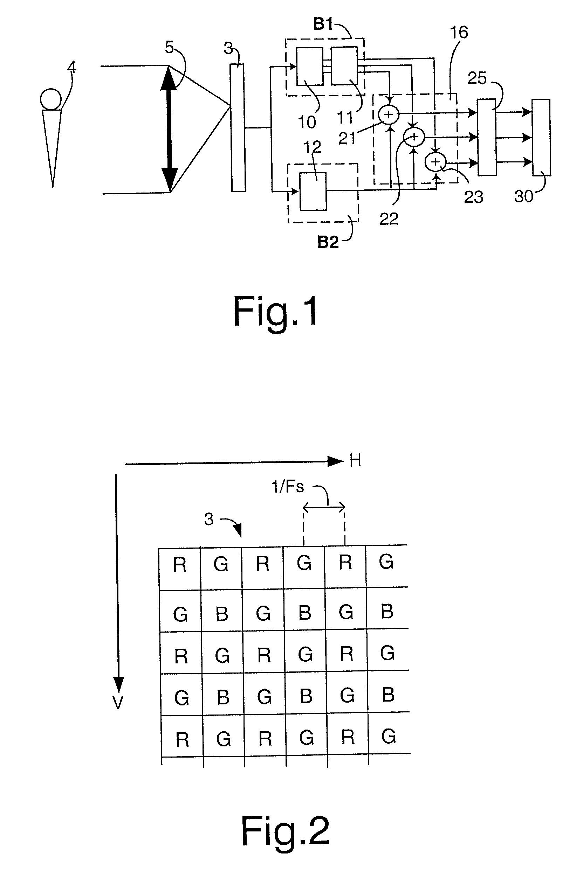

A la figure 1, on a représenté un appareil de prise de vue conforme à l'invention. La référence 3 indique le capteur comportant une pluralité d'éléments sensibles à différentes composantes de couleur. Le capteur est montré plus en détail à la figure 2. Sur ce capteur vient se focaliser le sujet 4, ce qui est obtenu par un objectif 5.

Les différents éléments de ce capteur, disposés en matrice selon des directions horizontale H et verticale V sont sensibles aux trois couleurs primaires :
- bleu, ces éléments sont indiqués par la lettre « B » sur la figure 2
- rouge, ces éléments sont indiqués par la lettre « R » sur la figure 2
- vert, ces éléments sont indiqués par la lettre « G » sur cette même figure 2.

A la sortie de ce capteur, il est possible de recueillir différents signaux correspondant à chacune desdites composantes de couleur. Ces différentes composantes de couleur subissent une opération de filtrage effectuée par un premier organe de filtrage 10 (figure 1). Cette opération consiste en un filtrage à deux dimensions 2D habituel pour ce genre d'appareil et a pour but d'éviter les effets de moiré dus à des chevauchements de spectre. Un filtrage de reconstruction de couleur 11 est aussi inséré dans la branche B1. Ce filtrage permet de régulariser la perception des couleurs.

Selon l'invention cet organe de filtrage 10 est mis dans une première branche B1, tandis que dans une deuxième branche B2 est inséré un deuxième organe de filtrage 12 destiné à améliorer le piqué de l'image. L'organe de filtrage 12 opère sur les signaux de tous les éléments du capteur 3 sans tenir compte de leur sensibilité aux différentes composantes de couleur.

Un dispositif de combinaison 16 combine les différents signaux issus des branches B1 et B2. Cette combinaison est une simple addition entre d'une part les signaux issus de filtre d'amélioration de contour et d'autre part les signaux relatifs à chacune des composantes de couleurs issus de la branche B1. Trois additionneurs 21, 22 et 23 sont prévus pour effectuer cette addition.

Au lieu d'avoir des informations d'images présentées sous forme de leurs composantes dans lesdites couleurs primaires rouge vert et bleu, on souhaite avoir l'information sous la forme connue sous le nom Y, U, V. Ces différentes composantes Y, U et V représentent respectivement la luminance, une information sur le rouge et une information sur le bleu. Cette forme Y, U et V est surtout utilisée pour les signaux de télévision. On effectue cette opération au moyen d'un organe de transformation 25. Si on préfère n'avoir affaire qu'aux signaux R, G, B, cet organe de transformation 25 peut être considéré comme une matrice de filtrage unitaire, donc ne faisant aucune transformation. Les informations ainsi traitées sont finalement stockées dans une mémoire 30 d'où l'on pourra prélever les images ainsi prises.

On fait des considérations sur la conception des différents organes de traitement 10, 12.

### - Organe 10.

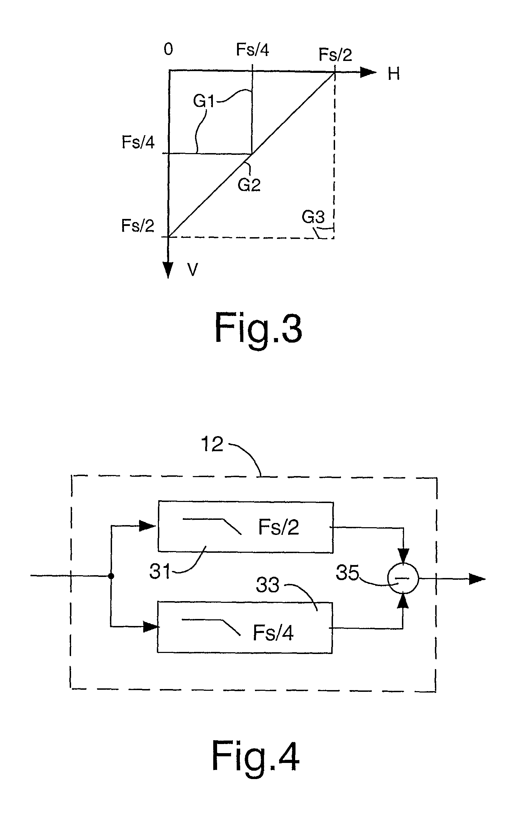

L'organe 10 a pour but de filtrer l'image selon un gabarit montré par la référence G1 à la figure 3. Sur cette figure 3 on montre la trace, dans un quadrant de l'espace, des différents spectres selon lesdites directions H et V. C'est un filtre passe-bas qui laisse passer les composantes de spectre inférieures à Fs/4.

1/Fs représente la distance entre pixels (figure 2). Le gabarit G2 représente le filtrage sur les pixels G qui sont favorisés par la répartition effectuée sur la matrice montrée à la figure 2.

### - Organe 12.

L'organe 12 a pour but de filtrer l'image selon un gabarit montré par la référence G3 à la figure 3, C'est un filtre passe-bande qui laisse passer les composantes de spectre supérieures à Fs/4 et inférieures à Fs/2. Il est associé à 2 gains G_{R} et G_{B} qui compensent les différences de rendement des filtres de couleur R et B par rapport au filtre G. En pratique ce filtre passe-bande est réalisé, comme montré à la figure 4, au moyen de deux filtres passe-bas 33 et 31 pour filtrer avec, respectivement, des composantes Fs/4 et Fs/2 considérées comme des fréquences de coupure et d'un organe de soustraction 35 de signaux à la sortie de ces filtres de façon à enlever la contribution du spectre 0-Fs/4 au filtre passe-bas 0-Fs/2.

## Revendications

1. Appareil de prise de vue formé à partir d'un capteur composé d'éléments sensibles à différentes composantes de couleur de la vue présentant tout un spectre de fréquences spatiales, d'au moins un premier organe de filtrage d'image pour les fréquences basses du spectre en vue de traiter les signaux issus desdits éléments sensibles, **caractérisé en ce qu'**il comporte une première branche dans laquelle est inséré ledit premier organe de filtrage, au moins une deuxième branche dans laquelle est inséré un deuxième organe de filtrage pour les fréquences hautes du spectre afin de filtrer tous les signaux issus desdits éléments et un dispositif de combinaison pour fournir une image en tenant compte des signaux de sortie desdites branches.

2. Appareil de prise de vue selon la revendication 1, **caractérisé en ce que** le deuxième organe de filtrage est constitué par deux filtres passe-bas, un à spectre étroit et un autre à spectre large et par un organe de soustraction pour enlever la contribution du filtre passe-bas dans le spectre filtré du filtre à spectre large.

3. Procédé de prise de vue, **caractérisé en ce qu'**il comporte les étapes suivantes :
- impression du capteur d'éléments sensibles aux différentes composantes de couleur de la vue,
- traitement des informations de ce capteur par une première branche de traitement opérant sur les éléments sensibles à la couleur,
- traitement des informations de ce capteur par une deuxième branche de traitement opérant sur tous les éléments sans tenir compte de la couleur et opérant sur la partie haute du spectre spatial,
- combinaison des différentes informations élaborées par lesdites branches pour fournir une image d'utilisation.
